# EUROPEAN PATENT SPECIFICATION

(11) **EP 3 493 987 B1**
(45) Date of publication and mention of the grant of the patent: **06.10.2021**
(21) Application number: 17755588.5
(22) Date of filing: 03.08.2017
(51) Int. Cl.: C08J 5/18, B32B 27/20, B32B 27/32, B32B 27/08, B32B 27/18, B32B 27/30

(54) **OPAQUE, HEAT SHRINKABLE FILM COMPRISING MICROLAYERS**
OPAKE, WÄRMESCHRUMPFBARE FOLIE MIT MIKROSCHICHTEN
FILM OPAQUE THERMORÉTRACTABLE COMPRENANT DES MICROCOUCHES

(30) Priority: 03.08.2016 US 201662370258 P
(43) Date of publication of application: 12.06.2019
(73) Proprietor: Sealed Air Corporation (US), Charlotte, NC 28208 (US)
(72) Inventor: RAMESH, Natarajan, S., Waxhax, NC 28173 (US); WOLF, John, Waxhaw, NC 28173 (US); LAFRANCE, Daniel, Worcester, MA 01605 (US)
(74) Representative: Uexküll & Stolberg
(86) International application number: PCT/US2017/045215
(87) International publication number: WO 2018/026984

(56) References cited:
- EP-A2- 0 236 099
- WO-A1-2018/000411
- US-A- 4 303 710
- US-A- 4 565 720
- US-A- 4 643 943
- US-A- 4 724 185
- US-A1- 2012 052 277
- DATABASE WPI Week 200814 18 October 2007 (2007-10-18) Thomson Scientific, London, GB; AN 2008-B85836 XP002774545, -& JP 2007 270412 A (DAINIPPON PRINTING CO LTD) 18 October 2007 (2007-10-18)

## Description

### TECHINCAL FIELD

The present disclosure relates to a thin, microlayer film having a pigment composition characterized by small particle sizes for use in a multilayer, heat-shrinkable film.

### BACKGROUND

Heat-shrinkable films have the ability, upon being exposed to a certain temperature, to shrink or to generate shrink tension when used in a packaging application. Conventionally, heat-shrinkable films are extruded (single layer film) or coextruded (multi-layer films) from thermoplastic based materials that have been heated to their flow or melting point at an extrusion or a coextrusion die. Following extrusion, the film is subjected to a post-extrusion quench to cool the film. The film may then be reheated to a temperature in it orientation temperature range in order to stretch the film to physically orient or align the crystallites and/or the molecules of the film.

Frequently, the film is irradiated following extrusion but prior to undergoing stretch orientation. Typically the film is irradiated using electron beams to induce cross-linking between the polymer chains that make up the film.

Once a product is enclosed in the heat-shrinkable film, the packaged product is subjected to an elevated temperature by subjecting the packaged product to hot air or hot water. This causes the film to shrink forming a tight wrap surrounding the enclosed packaged product.

US 2012/052277 A1 describes a multilayer, heat-shrinkable film that generally includes at least one bulk layer and a microlayer section comprising a plurality of microlayers. It has been discovered that the use of microlayers in films allows the microlayer to be adhered to other layers without the need for use of a tie especially between polar and nonpolar layers. Thus, a film formed from one or more microlayers may provide for a thinner film while still providing the needed functional properties of the film. Multiple layers, in particular, multiple microlayers may be included in the film to provide certain needed functionality to the film. Examples of particular functionalities that may be imparted to the film can include a peelable seal layer, odor-causing barrier properties, oxygen barrier, etc. However, additional functionality that remains includes a film with a color and a high opacity as well as a film having relatively good strength. In particular, these types of properties are amiss in conventional heat-shrinkable films, particularly, those heat-shrinkable films that include a microlayer.

There remains a need in the art for a microlayer that when included in a film imparts to the film a color and certain required opacity, preferably, at least about 90% opacity. There remains a further need in the art for a microlayer that, when included in a film, imparts to the film a high degree of strength allowing such films to be used in rigorous packaging applications among other uses as well where such a film is required.

### SUMMARY

The invention disclosed herein relates to a microlayer and a film constructed from such a microlayer having high opacity and good strength. Without intending to be bound by theory, a microlayer and techniques described herein result in a heat-shrinkable film suitable for packaging and enduring rigorous treatment in the transport of such packaged goods.

According to a first aspect of the present invention, a microlayer comprises 55 wt% to 80 wt% of a polyethylene; 2.5 wt% to 20 wt% of an elastomeric copolymer comprising an ethylene octene copolymer having less than 10 % by weight of an octene; and 5 wt% to 25 wt% of a pigment comprising submicron particles, wherein a thickness of the microlayer is no greater than 38.1 µm (1.5 mils) and an opacity of the microlayer is at least 90%, as measured according to ASTM D6290

In an embodiment, the pigment comprises a carbon black. In certain embodiments, the carbon black comprises particles ranging from 25 nm to 200 nm in diameter. Further pursuant to these embodiments, the carbon black particles have a median diameter ranging from 57.2 nm to 72.4 nm.

In other embodiments, the pigment comprises a titanium dioxide (TiO₂). In certain embodiments, the TiO₂ comprises particles ranging from 54 nm to 390 nm in diameter. Further pursuant to these embodiments, the TiO₂ particles have a median diameter of from 137.5 nm to 169.2 nm.

In certain embodiments, the polyethylene comprises 30 wt% to 60 wt% linear low density polyethylene; 0 wt% to 20 wt% low density polyethylene; and 10 wt% to 30 wt% medium density polyethylene.

According to a second aspect of the invention, a film comprises an outer layer; a substrate layer adjacent to the outer layer; and a core layer adjacent to the substrate layer, the core layer comprising one or more first microlayers according to the first aspect of the invention. In an embodiment, the one or more first microlayers having at least one of carbon black particles ranging from 25 nm to 200 nm in diameter and titanium dioxide (TiO₂) particles ranging from 54 nm to 390 nm in diameter.

The core layer of the film may additionally include one or more second microlayers having at least one of carbon black and TiO₂. In certain embodiments, the carbon black comprises particles ranging from 25 nm to 200 nm in diameter. In certain other embodiments, the TiO₂ comprises particles ranging from 54 nm to 390 nm in diameter.

In an embodiment, each of the one or more second microlayers individually separates each of the one or more first microlayers. Further pursuant to this embodiment, the core layer comprises thirteen one or more first microlayers and twelve one or more second microlayers. Such a film is characterized by an Elmendorf tear strength of at least about 27.9 g.

According to a third aspect of the invention, a method is provided for the manufacture of a film including the steps of passing a fluid through a plurality of microlayer assemblies to form film-like structures, the fluid comprising a pigment having one or more particulate compounds having diameters that are less than 390 nm; aligning the plurality of microlayers according to the the first aspect of invention to form a core layer; extruding a substrate layer that is placed adjacent to the core layer; and extruding an outer layer that is placed adjacent to the substrate layer.

Other aspects and embodiments will become apparent upon review of the following description taken in conjunction with the accompanying drawings.

### BRIEF DESCRIPTION OF THE DRAWINGS

The foregoing aspects and many of the attendant advantages of the disclosed subject matter will become more readily appreciated as the same become better understood by reference to the following detailed description, when taken in conjunction with the accompanying drawings, wherein:
FIG. 1 is a flow diagram of an extrusion process, in accordance with embodiments disclosed herein;
FIG. 2A is a scanning electron microscope image of the CHAR masterbatch having carbon black particles taken at 40,000X, in accordance with embodiments disclosed herein;
FIG. 2B is a scanning electron microscope image of the CHAR masterbatch having carbon black particles taken at 60,000X, in accordance with embodiments disclosed herein;
FIG. 3A is a scanning electron microscope image of the ZODI masterbatch having titanium oxide particles taken at 20,000X, in accordance with embodiments disclosed herein;
FIG. 3B is a scanning electron microscope image of the ZODI masterbatch having titanium oxide particles taken at 30,000X, in accordance with embodiments disclosed herein;
FIG. 4 is a graph showing the clarity versus the concentration of the CHAR masterbatch in 38.1 µm (150 gauge) film, in accordance with embodiments disclosed herein;
FIG. 5 is a graph showing the concentration of the CHAR masterbatch required to achieve 100% opacity for varying film thicknesses, in accordance with embodiments disclosed herein;
FIG. 6A is a graph showing the performance parameters of CORTUFF® and CT304, CT306 and CT308 heat shrinkable films for full shrink wrapped rigid products, in accordance with embodiments disclosed herein;
FIG. 6B is a graph showing the performance parameters of CORTUFF® and CT304, CT306 and CT308 heat shrinkable films for partial shrink wrapped rigid products, in accordance with embodiments disclosed herein;
FIG. 6C is a graph showing the performance parameters of CORTUFF® and CT304, CT306 and CT308 heat shrinkable films for no shrink wrapped rigid products, in accordance with embodiments disclosed herein;
FIG. 6D is a graph showing the performance parameters of CORTUFF® and CT304, CT306 and CT308 heat shrinkable films for full shrink wrapped semi rigid products, in accordance with embodiments disclosed herein;
FIG. 6E is a graph showing the performance parameters of CORTUFF® and CT304, CT306 and CT308 heat shrinkable films for partial shrink wrapped semi rigid products, in accordance with embodiments disclosed herein;
FIG. 6F is a graph showing the performance parameters of CORTUFF® and CT304, CT306 and CT308 heat shrinkable films for no shrink wrapped semi rigid products, in accordance with embodiments disclosed herein;
FIG. 6G is a graph showing the performance parameters of CORTUFF® and CT304, CT306 and CT308 heat shrinkable films for full shrink wrapped soft products, in accordance with embodiments disclosed herein;
FIG. 6H is a graph showing the performance parameters of CORTUFF® and CT304, CT306 and CT308 heat shrinkable films for partial shrink wrapped soft products, in accordance with embodiments disclosed herein;
FIG. 6I is a graph showing the performance parameters of CORTUFF® and CT304, CT306 and CT308 heat shrinkable films for no shrink wrapped soft products, in accordance with embodiments disclosed herein; and
FIG. 7 is a graph showing the performance parameters of a 22.9 µm (90 gauge) and 29.2 µm (115 gauge) black opaque heat shrinkable films for full shrink wrapped small and tall cardboard boxes, in accordance with embodiments disclosed herein.

### DETAILED DESCRIPTION

The embodiments described herein relate to a heat-shrinkable opaque film or a microlayer. The microlayer comprises a pigment. The pigments comprise submicron particles having particle sizes in the nanometer range. The opacity of the microlayer is at least 90%. The thickness of the microlayer is less than 38.1 µm (1.5 mils). In an embodiment, the pigment may comprise one of carbon black or titanium dioxide for forming a black and white colored film, respectively. In certain embodiments, a combination of carbon black and titanium dioxide may be used to achieve a desired gray-scale color level for the film.

As used herein, the term "submicron particles" refers to particles having an average diameter of less than 1 micron.

In an embodiment, the multilayers described herein may be extruded using a micro-layering process as further described herein. Without intending to be bound by the theory, the multilayers of the embodiments described herein generally provide films having improved resistance for product protection and leads to packing integrity of wrapped products. The smaller size of the CRYOVAC® CT films also results in a more sustainable packaging solution including a reduced carbon footprint as a result of reduced material usage to achieve the needed packaging effect, a reduction in the amount of waste materials from packaging operations, and an energy saving as a result of lower tunnel and sealing temperature required in the packaging operation.

The microlayers described herein have been found to be of particular importance in the CRYOVAC CT series of films. The CRYOVAC CT series of films provides a relatively new technological capability within the packing industry by incorporated discrete microlayers within the film leading to films having good strength properties and enhanced performance capability in comparison to thicker conventional shrink films. When used in the CRYOVAC CT films, the multilayers described herein provide improved resistance for product protection and lead to packing integrity of wrapped products. The smaller size of the CRYOVAC CT films also results in a more sustainable packaging solution including a reduced carbon footprint as a result of reduced material usage to achieve the needed packaging effect, a reduction in the amount of waste materials from packaging operations, and an energy saving as a result of lower tunnel and sealing temperature required in the packaging operation.

A plurality of layers may be coextruded with the use of a die and one or more extruders in fluid communication with the die. The one or more extruders are configured to supply one or more fluidized polymers to the die. The one or more extruders are maintained at a temperature sufficient to keep the contents of each extruder in a molten state. Internal screws within the extruder may act to move the molten polymer into and through the die via tubes or pipes. The die converts the molten contents received from each of the one or more extruders into thin film layers with each layer being superimposed, combined together and then expelled through the discharge of the die to a coextruded. Upon exiting the die, the coextruded film is subjected to cooling causing the film to transform into a solid state. Such cooling may be achieved by subjecting the film to ambient air and/or quenching the film in a liquid quench bath.

A die is generally configured to have any number of distribution plates that function as a fluid inlet and a fluid outlet that deposits the existing formed film from the fluid outlet onto a primary forming stem. The fluid is directed through a channel of the distribution plate that progressively become more shallow causing the fluid to assume a thinner formed profile.

The fluid layers received from the distribution plates may be deposited on the primary forming stem either directly or indirectly disposed on already deposited films. The formed film emerges from the die at a discharge end or through what is also known as the "die lip." The thickness of the formed films may be further decreased through an annular passage as the film exits the die.

A microlayer assembly comprises a microlayer forming stem along with a plurality of microlayer distribution plates. Each of the microlayer plates has a fluid inlet and a fluid outlet whereby the fluid inlet is in fluid communication with a microlayer forming stem and is configured to deposit a microlayer of fluid onto the microlayer forming stem.

The channel of the microlayer plates may be spiral-shaped, for example; however, other channel configurations may be employed including, but not limited to, a toroid-shaped channel, an asymmetrical toroid channel, a heart-shaped channel, and a helical-shaped channel. The channel may have a semi-circular or semi-oval cross-section or may have a fuller shape such as an oval or circular cross-sectional shape.

A fluid flow passing through the microlayer assembly is converted from a generally stream-like, axial flow to a generally film-like, convergent radial flow as it progresses to the microlayer forming stem. This may be accomplished, for example, by a channel that spirals towards the center of the plate thus directing fluid from the fluid inlet located at the periphery of a microlayer plate to an outlet that is proximate to the center of the plate. Alternatively, the channel may have a progressively shallower depth as the channel forms to the fluid outlet effectively causing a portion of the fluid flowing through the channel to overflow the channel through overflow regions and then proceeding radial-inward toward the fluid outlet in a relatively flat, film-like flow. The fluid outlet provides a relatively narrow fluid-flow passage, which influences the thickness of the formed microlayer flowing from the microlayer plate.

The microlayer assembly may be located relative to the distribution plates to provide for the needed location of the one or more microlayers in the formed film. For example, the microlayer assembly may be positioned between one or more upstream distribution plates . In other embodiments, a plurality of microlayers may be deposited throughout a finished film by using a plurality of microlayer assemblies.

A more detailed description of coextrusion techniques can be found in U.S. Patent No. 8,012,572 entitled "Multilayer, Heat-Shrinkable Film Comprising a Plurality of Microlayers".

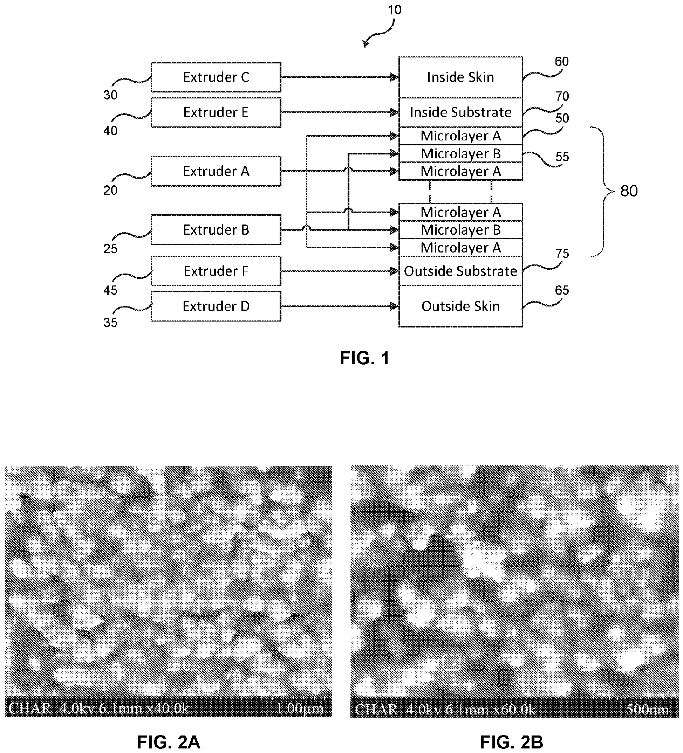

FIG. 1 is a flow diagram depicting extrusion according to an embodiment of forming a multilayer film. According to this process flow representation **10,** extruder A **20,** and extruder B **25** were used to form the microlayers of a core layer **80** such as a microlayer A **50** and a microlayer **B 55;** extruder C **30** and extruder D **35** were used for an inside skin **60** and an outside skin **65,** respectively; and extruder E **40** and extruder F **45** were used for an inside substrate **70** and an outside substrate **75,** respectively. The film of this process flow representation **10** shown in FIG. 1 comprises the following layers: inside skin **60,** inside substrate **70,** the core layer **80,** outside substrate **75,** and outside skin **65.** The core layer **80** contains multiple, and, in this exemplary embodiment, alternating layers of microlayer A **50** and microlayer B **55.** So, for example, a core layer **80** having 25 layers would include thirteen microlayer A **50** and twelve microlayer B **55.**

The multilayer film includes microlayers having pigments allowing the multilayer film to become opaque and/or allowing a color to be imparted to the multilayer film.

In an embodiment, either or both of the inner layer and/or the outer layer may comprise from 30 wt% to 60 wt% linear low density polyethylene, form 15 wt% to 30 wt% medium density polyethylene, from 15 wt% to 40 wt% ethylene vinyl acetate copolymer (including up to about 2.5% vinyl acetate in one embodiment, up to about 5% vinyl acetate in another embodiment, or up to about 10% vinyl acetate in yet another embodiment), from 2 wt% to 20 wt% of an ethylene octene copolymer (having less than a 10% octene, less than about 6% octene or less than about 2.5% octene in varying embodiments), and from 0.5 wt% to 2.5 wt% additives, or about 1 wt% +/- 0.1 wt% additives in a preferred embodiment. In certain embodiments, the additives comprise an antiblock agent, a slip agent, an antiblock/slip agent, and any combination thereof.

In an embodiment, a substrate comprises a resin having from 30 wt% to 60 wt% linear low density polyethylene, from 15 wt% to 30 wt% medium density polyethylene, from 15 wt% to 40 wt% ethylene vinyl acetate copolymer (including up to about 2.5% vinyl acetate in one embodiment, up to about 5% vinyl acetate in another embodiment, or up to about 10% vinyl acetate in yet another embodiment), and from 2 wt% to 20 wt% ethylene octene copolymer (having less than a 10% octene, less than about 6% octene or less than about 2.5% octene in varying embodiments).

In certain embodiments, the microlayer is constructed to provide a film that is black in color. Further pursuant to this embodiment, the pigment comprises from about the resin comprises from 5 wt% to 25 wt % of carbon black. Even further pursuant to this embodiment, the resins comprise from 30 wt% to 60 wt% linear low density polyethylene, from 0 wt% to 20 wt% low density polyethylene, from 10 wt% to 30 wt% medium density polyethylene, and from 2.5 wt% to 20 wt% ethylene octene copolymer (having less than a 10% octene), less than about 6% octene or less than about 2.5% octene in varying embodiments).

According to the embodiments where the microlayer is constructed to provide a film that is white in color, the pigment comprises from 5 wt% to 25 wt% of titanium dioxide. In embodiments wherein the microlayer is constructed to provide a film that is gray in color, the pigment comprises a combination of from 5 wt% to 20 wt% carbon black and 5 wt% to 20 wt% titanium dioxide.

Without intending to be bound by theory, ethylene vinyl acetate (EVA) is an elastomeric polymer that, in the proper concentration, provides a softness and flexibility to the film in which it appears. Similarly, ethylene octene copolymer may function as an elastomeric material. Thus, their combination may be referred to as an elastomeric polymer. The microlayer comprises from 55 wt% to 80 wt% of a polyethylene, from 2.5 wt% to 20 wt% of an elastomeric copolymer comprising an ethylene octene copolymer having less than 10% by weight of an octene, and from 5 wt% to 25 wt% of a pigment.

The microlayers comprise a pigment used for the manufacture of opaque films. In one embodiment, the microlayer comprises a pigment that provides a black color to the finished film. Further pursuant to this embodiment, the pigment comprises a carbon black. Yet even further pursuant to this embodiment, the carbon black includes particles having particle sizes ranging from 25 nanometers to 200 nanometers in diameter. In still other embodiments, the carbon black particles have an average particle size ranging from 25 nanometers to 200 nanometers in diameter. The selected sizes of the particles are such that they are smaller than the thickness of the microlayer allowing for homogeneous dispersion as well as improved film properties. In certain embodiments, the D50 or median value of the carbon blank particles ranges from 57.2 nm to 72.4 nm or from 63.6 nm to 65.8 nm, a mean value of the carbon black particles ranges from 60.0 nm to 78.7 nm or from 66.7 nm to 71.0 nm, and a standard deviation ranging from about 25.8 nm to about 32.1 nm. The concentration of carbon black having particle sizes in these nanometer ranges is from 2 wt% to 25 wt%, from 5 wt% to 20 wt%, from 9 wt% to 16 wt%, or from 10 wt% to 15 wt% in the microlayer.

In another embodiment, the microlayer comprises a pigment that provides a white color to the finished film. Further pursuant to this embodiment, the pigment comprises titanium dioxide (TiO₂). Yet even further pursuant to this embodiment, the TiO₂ includes particles having particle sizes ranging from 54 nanometers to 390 nanometers in diameter. In still other embodiments, the TiO₂ particles have an average particle size ranging from 54 nanometers to 390 nanometers in diameter. The selected sizes of the particles are such that they are smaller than the thickness of the microlayer allowing for homogeneous dispersion as well as improved film properties. In certain embodiments, the D50 or median value of the TiO₂ particles ranges from 137.5 nm to 169.2 nm or from 152.8 nm to 153.9 nm, a mean value of the TiO₂ particles ranges from 154.0 nm to 177.9 nm or from 160.1 nm to 161.7 nm, and a standard deviation ranging from about 68.1 nm to about 68.5 nm. The concentration of TiO₂ having particle sizes in these nanometer ranges is from about to 5 wt% to 25 wt%, from 10 wt% to 25 wt%, or from 15 wt% to 20 wt% in the microlayer.

In yet another embodiment, the microlayer comprises a pigment that provides a gray color to the finished film. Further pursuant to this embodiment, the pigment comprises a carbon black and TiO₂. Yet even further pursuant to this embodiment, the carbon black includes particles having particle sizes ranging from 25 nanometers to 200 nanometers in diameter and the TiO₂ includes particles having particle sizes ranging from 54 nanometers to 390 nanometers in diameter. In still other embodiments, the carbon black particles have an average particle size ranging from 25 nanometers to 200 nanometers in diameter and the TiO₂ particles have an average particle size ranging from 54 nanometers to 390 nanometers in diameter. The selected sizes of the particles are such that they are smaller than the thickness of the microlayer allowing for homogeneous dispersion as well as improved film properties. In an embodiment, the weight ratio of the carbon black to the TiO₂ is from about 1:4 to about 4:1, from about 1:3 to about 3:1, or from about 1:2 to about 2:1. In an embodiment, the preferred weight ration of the carbon black to the TiO₂ is about 1:2.

While carbon black and TiO₂ are shown to be the pigments in these representations, these are only exemplary in nature. Rather, any type of pigment that may impart any color to the finished film may be used. Pigment, in non-limiting examples, may comprise azo compounds having the function group of RN=NR', and quinacridones-C₂₀H₁₂N₂O₂. For example, the pigment may comprise one or more compounds that provide a purple hue including, but not limited to, a silicate of sodium and aluminum containing sulfur, BaCuSi₂O₆, cobaltous orthophosphate, manganic ammonium phosphate-NH4MnP₂O₇, iron(III) oxide-Fe₂O₃, and dioxazine family of heterocyclic compounds.

The pigment may comprise one or more compounds that provide a blue hue including, but not limited to, a sulfur containing sodium-silicate-Na₆₋₁₀Al₆Si₆O₂₄S₂₋₄ calcium copper silicate-CaCuSi₄O₁₀, barium copper silicate-BaCuSi₄O₁₀, ferric hexacyanoferrate-Fe₇(CN)₁₈, the general formula YIn₁₋ₓMηₓO₃, indigo-C₁₆H₁₀N₂O₂., and copper phthalocyanine.

The pigment may comprise one or more compounds that provide a green hue including, but not limited to, cupric carbonate hydroxide-Cu₃(CO₃)₂(OH)₂, cupric carbonate hydroxide-Cu₂CO₃(OH)₂, cupric acetoarsenite-Cu(C₂H₃O₂)₂·3Cu(AsO₂)₂, cupric arsenite-CuHAsO₃, cupric acetate-Cu(CH₃CO₂)₂, malachite-Cu₂CO₃(OH)₂, chromic oxide-Cr₂O₃, combination of CdS and chromic oxide, and hydrated chromic oxide- Cr₂O₃·H₂O.

The pigment may comprise one or more compounds that provide a yellow hue including, but not limited to, monoclinic arsenic sulfide-As₂S₃, cadmium sulfide-CdS, plumbous chromate-PbCrO₄, potassium cobaltnitrite-Na₃Co(NO₂)₆, monohydrated ferric oxide-Fe₂O₃·H₂O, lead stannate-Pb₂SnO₄, silicate of lead tin oxide-Pb(SnSi)O₃, titanium-based pigments providing a yellow coloration-NiO·Sb₂O₃·20TiO₂, stannic sulfide-SnS₂, compounds produced through the azo coupling of aniline, acetoacetanilide or derivatives thereof, diarylide pigment, euxanthic acid-C₁₉H₁₆O₁₀, monoazopyrazolone-C₁₆H₁₂Cl₂N₄O, derivative of isoindoline-C₁₆H₉N₅O₆, and bisacetoacetarylide-C₃₄H₂₈Cl₄N₆O₄.

The pigment may comprise one or more compounds that provide an orange hue including, but not limited to, cadmium sulfoseleniode-CdSe, a combination of lead(II)chromate and lead(II) oxide-PbCrO₄ and PbO, and dibromoanthanthrone-C₂₂HgBR₂O₂ (provides a redish-orange hue).

The pigment may comprise one or more compounds that provide a red hue including, but not limited to, cadmium selenide-CdSe, anhydrous iron oxide-Fe₂O₃, lead tetroxide-Pb₃O₄, mercuric sulfide-HgS, 1,2-dihydroxyanthraquinone-C₁₄H₈O₄, naphthol red-C₂₆H₂₂,N₄O₄, and perinone-C₂₆H₁₂N₄O₂.

The pigment may comprise one or more compounds that provide a brown hue including, but not limited to, the combination of iron oxide, manganese oxide and aluminum oxide-Fe₂O₃ and MnO₂ and AlO₃, limonite clay, and bistre brown.

The pigment may comprise one or more compounds that provide a black hue including, but not limited to, carbon based pigments including carbon black, ivory black, vine black, lamp black; iron oxide-Fe₃O₄, and titanium(III) oxide-Ti₂O₃.

The pigment may comprise one or more compounds that provide a white hue including, but not limited to, stibous oxide-Sb₂O₃, barium sulfate-BaSO₂, plumbous carbonate-(PbCO₃)₂·Pb(OH)₂, titanium oxide-TiO₂, and zinc oxide-ZnO.

Various naturally occurring pigments may also be use including, but not limited to, anthoxanthin (pigments from plants), gamboge (resin from certain evergreen trees), and madder lake (extract from madder plants).

Chapter 11 entitled "Colorants, Part I: Pigments and Dyes" written by Dr. E. Herrmann and Dr. W. Damm in the book entitled Plastics Additives Handbook, 4th ed., edited by R. Gachter and H. Muller, Hanser/Gardner Publications, Inc., published in Cincinnati in 1996, identifies pigments in Tables 4-7

Of course, as a person of ordinary skill in the art would understand having the benefit of this disclosure, any combination of these compounds may be used to provide a desired color hue. Preferably, any of these compounds used in the microlayer will be in particle form having small diameters relatively similar to those disclosed herein for carbon black and/or TiO₂. The pigment comprises a submicron silica pigment in certain embodiments. For example the SYLOJET® A-Series or C-Series comprise such submicron particles.

The identified particle sizes of the particles making up the pigment provide a finished film having a good opacity-equal to or greater than 90%--and a high Elmendorf tear strength. Indeed, the use of particle sizes of the pigment in the specified ranges has been demonstrated to provide a finished film opacity that is uniform and consistent across the film.

In yet even another embodiment, the microlayer comprises a pigment that provides any color other than black, white or gray to the finished film. Further pursuant to this embodiment, the pigment comprises particles having a smaller size within the nanometer range that provides a high degree of opacity--equal to or greater than 90%--and provide a good Elmendorf tear strength to the finished film.

While a thickness of the finished film is dependent upon the number of layers, in particular, the number of microlayers included in the film, a film characterized by an inner skin and an outer skin with each having a substrate layer in which a core layer having about 25 microlayers disposed will have a thickness ranging from about 10.2 µm (40 gauge) to about 76.2 µm (300 gauge), from about 12.7 µm (50 gauge) to about 63.5 µm (250 gauge), from about 15.2 µm (60 gauge) to about 50.8 µm (200 gauge), or from about 17.8 µm (70 gauge) to about 38.1 µm (150 gauge). In preferred embodiments, the film thickness is 22.9 µm (90 gauge) or higher. A 22.9 µm (90 gauge) film, for example, without intending to be bound by theory, offers a good carbon footprint in balance with certain physical properties of the film.

In some embodiments, finished films comprising a microlayer have a clarity ranging from about 0% to about 20%, from about 0% to about 10%, from about 0% to about 5%, from about 0% to about 1%, or from about 0% to about 0.2%. In some embodiments, the finished films comprising a microlayer have a gloss ranging from about 25% to about 75%, from about 40% to about 60%, or from about 47% to about 52%.

In some embodiments, finished films comprising a microlayer have a coefficient ranging from about 0.100 to about 0.200, from about 0.110 to about 0.180, or from about 0.116 to about 0.163. In some embodiments, finished films comprising a microlayer have a moisture vapor transmission rate (MVTR) ranging from about 45.9 g/m²/day/MPa (0.30 g/100 in²/day/atm) to about 214 g/m²/day/MPa (1.4 g/100 in²/day/atm), from about 61.2 g/m²/day/MPa (0.40 g/100 in²/day/atm) to about 198 g/m²/day/MPa (1.3 g/100 in²/day/atm), from about 78.0 g/m²/day/MPa (0.51 g/100 in²/day/atm) to about 168 g/m²/day/MPa (1.1 g/100 in²/day/atm), or from about 107 g/m²/day/MPa (0.70 g/100 in²/day/atm) to about 168 g/m²/day/MPa (1.1 g/100 in²/day/atm).

In some embodiments, finished films comprising a microlayer have an oxygen transmission rate (OTR) ranging from about 306 cm³/m²/day/kPa (2,000 cc/100 in²/day/atm) to about 1,530 cm³/m²/day/kPa (10,000 cc/100 in²/day/atm), ranging from about 459 cm³/m²/day/kPa (3,000 cc/100 in²/day/atm) to about 1,377 cm³/m²/day/kPa (9,000 cc/100 in²/day/atm), ranging from about 472 cm³/m²/day/kPa (3,085 cc/100 in²/day/atm) to about 1,224 cm³/m²/day/kPa (8,000 cc/100 in²/day/atm), or ranging from about 666.3 cm³/m²/day/kPa (4,355 cc/100 in²/day/atm) to about 1,224 cm³/m²/day/kPa (8,000 cc/100 in²/day/atm).

In some embodiments, finished films comprising a microlayer have a longitudinal direction (LD) tensile strength ranging from about 68.9 MPa (10,000 psi) to about 172 MPa (25,000 psi), ranging from about 86.1 MPa (12,500 psi) to about 155 MPa (22,500 psi), ranging from about 103 MPa (14,900 psi) to about 137 MPa (19,800 psi), or ranging from about 108 MPa (15,700 psi) to about 137 MPa (19,800 psi). In some embodiments, finished films comprising a microlayer have a transverse direction (TD) tensile strength ranging from about 68.9 MPa (10,000 psi) to about 172 MPa (25,000 psi), ranging from about 86.1 MPa (12,500 psi) to about 155 MPa (22,500 psi), ranging from about 95.8 MPa (13,900 psi) to about 140 MPa (20,300 psi), or ranging from about 104 MPa (15,100 psi) to about 140 MPa (20,300 psi).

In some embodiments, finished films comprising a microlayer have a LD elongation at break ranging from about 80% to about 250%, ranging from about 100% to about 200%, ranging from about 120% to about 180%, or ranging from about 150% to about 180 %. In some embodiments, finished films comprising a microlayer have a TD elongation at break ranging from about 75% to about 225%, ranging from about 100% to about 200%, ranging from about 99% to about 180%, or ranging from about 140% to about 160 %.

In some embodiments, finished films comprising a microlayer have a LD modulus ranging from about 276 MPa (40,000 psi) to about 689 MPa (100,000 psi), ranging from about 345 MPa (50,000 psi) to about 621 MPa (90,000 psi), ranging from about 301 MPa (43,600 psi) to about 532 MPa (77,100 psi), or ranging from about 418 MPa (60,600 psi) to about 532 MPa (77,100 psi). In some embodiments, finished films comprising a microlayer have a TD modulus ranging from about 276 MPa (40,000 psi) to about 689 MPa (100,000 psi), ranging from about 310 MPa (45,000 psi) to about 655 MPa (95,000 psi), ranging from about 328 MPa (47,500 psi) to about 611 MPa (88,600 psi), or ranging from about 461 MPa (66,800 psi) to about 611 MPa (88,600 psi).

In some embodiments, finished films comprising a microlayer have a LD Elmendorf tear ranging from about 5.0 g to about 50.0 g, ranging from about 10.0 g to about 45.0 g, ranging from about 11.6 g to about 35.0 g, or ranging from about 28.3 g to about 35.0 g. In some embodiments, finished films comprising a microlayer have a TD Elmendorf tear ranging from about 5.0 g to about 50.0 g, ranging from about 10.0 g to about 40.0 g, ranging from about 13.1 g to about 33.3 g, or ranging from about 27.9 g to about 33.3 g. In certain embodiments, the films described herein have a Elmendorf tear greater than about 10 g.

In some embodiments, finished films comprising a microlayer have a LD shrink tension @ 93.3°C (200°F) ranging from about 1.38 MPa (200 psi) to about 2.78 MPa (400 psi), ranging from about 1.55 MPa (225 psi) to about 2.59 MPa (375 psi), ranging from about 1.70 MPa (246 psi) to about 2.34 MPa (340 psi), or ranging from about 1.95 MPa (283 psi) to about 2.34 MPa (340 psi). In some embodiments, finished films comprising a microlayer have a TD shrink tension @ 177°C (3 50°F) ranging from about 2.07 MPa (300 psi) to about 4.48 MPa (650 psi), ranging from about 2.41 MPa (350 psi) to about 4.14 MPa (600 psi), ranging from about 2.83 MPa (410 psi) to about 3.94 MPa (572 psi), or ranging from about 3.70 MPa (536 psi) to about 3.94 MPa (572 psi).

In some embodiments, finished films comprising a microlayer have a LD free shrink @ 93.3°C (200°F) ranging from about 5% to about 20%, ranging from about 7% to about 17%, from about 9% to about 14%, or ranging from about 11% to about 14%. In some embodiments, finished films comprising a microlayer have a TD free shrink @ 93.3°C (200°F) ranging from about 10% to about 25%, ranging from about 12% to about 23%, ranging from about 15% to about 21%, or ranging from about 16% to about 21%.

### Test Methods:

The peak load measured in lbs (1 lbs = 0.45 kg) is reflective of the impact strength. Impact strength is measured according to ASTM D3763 the "Standard Test Method for High Speed Puncture Properties of Plastics."

Clarity is the optical distinctness through which an object can be seen when viewed through a film. Clarity depends upon the linearity of the passage of light rays through the material of the film. Small deflections of light caused by scattering regions of the material cause a deterioration of the image quality. Clarity is measured according to ASTM D1746 the "Standard Test Method for Transparency of Plastic Sheeting" using a Zebedee Model CL 100 clarity meter. This instrument is design to measure the extent of transparency whenever distinctiveness of image is an important attribute.

Gloss is a visual impression resulting from an evaluation of the surface of the film. The more direct light is reflected from the surface, the more obvious the impression of gloss will be. Smooth and highly polished surfaces more readily reflect images. If a surface is rough, the light is diffusely scattered in all directions causing the image forming qualities to be diminished. Gloss is measured according to ASTM D2457 the "Standard Test Method for Specular Gloss of Plastics Films and Solid Plastics" using a BYK-Gardner model 4535 gloss meter.

The transparency of a product is influenced by the absorption and scattering behavior of the film. Visual transparency is described by clarity as further disclosed herein and haze. Optical haze is related to the ratio of transmitted light that deviates from the normal direction by more than about 4 degrees relative to the total transmitted light. Haze & total transmission is measured according to ASTM D1003 the "Standard Test Method for Haze and Luminous Transmittance of Transparent Plastics" using the BYK-Gardner model 4725 Haze-Gard Plus instrument.

Opacity measures the degree to which a film obscures a pattern passing through it. An opaque material will have 100% opacity, while a near-opaque film is typically above 80% opacity and often above 90% opacity. Color/opacity is measured according to ASTM D6290 the "Standard Test Method for Color Determination of Plastic Pellets". For example, a Hunter Lab spectrophotometer may be used to measure the degree of color and the extent of opacity of a film. Alternatively, opacity may indirectly be calculated as 100 - %Total Transmission.

Particle sizes of pigments are measured using a scanning electron microscope (SEM) at very high magnifications of up to 100,000X of the pellets.

### EXAMPLES

Various examples of the subject matter include a microlayer and films comprising such a microlayer. Specific examples of the concept will now be described.

The film structure for the test samples includes 29 layers with layers 1 and 29 being the outer skins, layers 2 and 28 being the substrates. Table 1 identifies the general film structure for the test samples of the examples.

Layers 3-27 is a 25 layer core structure having alternating microlayer A (13 of the 25 layers) and microlayer B (12 of the 25 layers).

A black masterbatch having codename CHAR with 50 wt% polymer/copolymer resin and 50 wt% carbon black was used in the test samples of the example. The carbon black particles of CHAR had diameters in the range of 25 to 200 nanometers. The size of the particles can be determined from a scanning electron microscope image. FIG. 2A is a scanning electron microscope image of the CHAR masterbatch having carbon black particles taken at 40,000X according to an embodiment. FIG. 2B is a scanning electron microscope image of the CHAR masterbatch having carbon black particles taken at 60,000X according to an embodiment. The carbon black masterbatch used in these examples was supplied by Ampacet Corporation.

**TABLE 1**

| Generalized Layer Structure for Example Films | | | |
|---|---|---|---|
| Layer | Thickness % | Compound | Concentration wt% |
| Outer Skin | 10.00% | LLDPE, ethylene octene copolymer (<10% octene) | 48.90% |
| | | MDPE, ethylene octene copolymer (<10% octene) | 24.30% |
| | | Ethylene vinyl acetate copolymer (2.5% VA) | 25.78% |
| | | Antiblock/Slip | 0.94% |
| | | Antiblock | 0.08% |
| Substrate | 10.00% | LLDPE, ethylene octene copolymer (<10% octene) | 48.90% |
| | | MDPE, ethylene octene copolymer (<10% octene) | 24.30% |
| | | Ethylene vinyl acetate copolymer (2.5% VA) | 25.88% |
| | | Antiblock | 0.24% |
| | | Slip₁ (wax) | 0.22% |
| | | Slip₂ (wax) | 0.36% |
| | | Oleamide | 0.11% |

| Core Layer | | | |
|---|---|---|---|
| Microlayer A | 30.00% (total) | LLDPE, ethylene octene copolymer (<10% octene) | 100 - (x%+y%) |
| | | CHAR (50 wt% carbon black) | x% |
| | | ZODI (50 wt% titanium dioxide) | y% |
| Microlayer B | 30.00% (total) | LLDPE, ethylene octene copolymer (<10% octene) | 60% - 0.5(x% + y%) |
| | | MDPE, ethylene octene copolymer (<10% octene) | 40% - 0.5(x% + y%) |
| | | CHAR (50 wt% carbon black) | x% |
| | | ZODI (50 wt% titanium dioxide) | y% |

| | | ... | |
|---|---|---|---|
| | | Core Layer | |
| Substrate | 10.00% | LLDPE, ethylene octene copolymer (<10% octene) | 48.90% |
| | | MDPE, ethylene octene copolymer (<10% octene) | 24.30% |
| | | Ethylene vinyl acetate copolymer (2.5% VA) | 25.88% |
| | | Antiblock | 0.24% |
| | | Slip₁ (wax) | 0.22% |
| | | Slip₂ (wax) | 0.36% |
| | | Slip₃ (wax) | 0.11% |
| Outer Skin | 10.00% | LLDPE, ethylene octene copolymer (<10% octene) | 48.90% |
| | | MDPE, ethylene octene copolymer (<10% octene) | 24.30% |
| | | Ethylene vinyl acetate copolymer (2.5% VA) | 25.78% |
| | | Antiblock/Slip | 0.94% |
| | | Antiblock | 0.08% |

A white masterbatch having codename ZODI having 50 wt% polymer/copolymer resin and 50 wt% titanium dioxide (TiO₂) was used in the test samples of the example. The TiO₂ particles of ZODI had diameters in the range of 54 to 390 nanometers.

**TABLE 2**

| Carbon Black Particle Size Distribution | | | | | | | | | | |
|---|---|---|---|---|---|---|---|---|---|---|
| Figure 2A | | | | | Figure 2B | | | | | |
| 65.83 | | | | | D50, nm | | | 63.56 | | |
| 71.02 | | | | | mean, nm | | | 66.73 | | |
| 32.13 | | | | | standard deviation, nm | | | 25.81 | | |
| FIG. 2A Sampled Values, nm | | | | | | | FIG. 2B Sampled Values, nm | | | |
| 28.85 | 40.58 | 46.89 | 58.61 | 72.14 | 83.86 | 103.70 | 25.42 | 47.82 | 65.38 | 81.72 |
| 28.85 | 40.58 | 47.79 | 58.61 | 73.04 | 84.76 | 103.70 | 25.42 | 47.82 | 65.98 | 81.72 |
| 28.85 | 41.48 | 47.79 | 58.61 | 73.04 | 85.66 | 104.60 | 27.24 | 47.82 | 67.80 | 81.96 |
| 29.76 | 42.38 | 48.69 | 59.51 | 73.94 | 85.66 | 106.40 | 29.66 | 49.03 | 67.80 | 84.14 |
| 29.76 | 42.38 | 48.69 | 60.41 | 73.94 | 87.47 | 110.01 | 31.48 | 49.03 | 68.40 | 85.35 |
| 30.66 | 43.28 | 48.69 | 61.32 | 74.84 | 88.37 | 110.01 | 32.08 | 49.03 | 68.40 | 85.35 |
| 31.56 | 43.28 | 49.59 | 64.02 | 74.84 | 88.37 | 112.71 | 33.29 | 49.64 | 69.01 | 85.96 |
| 31.56 | 43.28 | 49.59 | 64.02 | 74.84 | 88.37 | 112.71 | 33.29 | 50.85 | 69.61 | 85.96 |
| 33.36 | 43.28 | 49.59 | 64.02 | 75.74 | 88.37 | 113.62 | 35.71 | 50.85 | 70.22 | 87.77 |
| 34.27 | 43.28 | 50.50 | 64.92 | 75.74 | 91.07 | 114.52 | 35.71 | 51.45 | 70.82 | 87.77 |
| 34.27 | 43.28 | 50.50 | 64.92 | 78.45 | 91.97 | 115.42 | 37.53 | 52.06 | 71.43 | 87.77 |
| 34.27 | 43.28 | 51.40 | 65.83 | 78.45 | 92.88 | 119.93 | 37.53 | 52.06 | 72.03 | 88.38 |
| 35.17 | 44.18 | 51.40 | 65.83 | 79.35 | 92.88 | 128.04 | 38.14 | 52.66 | 72.03 | 89.59 |
| 35.17 | 45.09 | 52.30 | 67.63 | 79.35 | 93.78 | 128.04 | 39.35 | 53.87 | 73.24 | 89.59 |
| 36.07 | 45.09 | 52.30 | 67.63 | 79.35 | 95.58 | 128.04 | 40.56 | 56.30 | 73.85 | 90.80 |
| 36.97 | 45.99 | 52.30 | 67.63 | 79.35 | 97.39 | 129.85 | 41.16 | 57.51 | 73.85 | 92.62 |
| 37.87 | 45.99 | 52.30 | 67.63 | 81.15 | 97.39 | 134.36 | 41.77 | 57.51 | 74.46 | 97.46 |
| 37.87 | 45.99 | 52.30 | 67.63 | 82.06 | 97.39 | 135.26 | 42.37 | 57.51 | 74.46 | 97.46 |
| 37.87 | 45.99 | 53.20 | 68.53 | 82.06 | 97.39 | 139.77 | 42.98 | 58.72 | 75.67 | 98.06 |
| 38.77 | 45.99 | 53.20 | 68.53 | 82.06 | 97.39 | 145.18 | 43.58 | 59.32 | 78.09 | 101.09 |
| 38.77 | 45.99 | 54.10 | 70.33 | 82.96 | 97.39 | 146.98 | 44.19 | 59.93 | 78.69 | 104.72 |
| 38.77 | 45.99 | 54.10 | 70.33 | 82.96 | 100.09 | 146.98 | 44.79 | 59.93 | 79.30 | 108.35 |
| 39.68 | 46.89 | 55.91 | 70.33 | 82.96 | 100.99 | 165.01 | 45.40 | 60.53 | 79.30 | 118.04 |
| 39.68 | 46.89 | 55.91 | 70.33 | 82.96 | 101.89 | 175.83 | 45.40 | 61.14 | 79.30 | 127.72 |
| 39.68 | 46.89 | 56.81 | 70.33 | 83.86 | 102.80 | 178.54 | 45.40 | 61.74 | 79.90 | 133.78 |
| 40.58 | 46.89 | 57.71 | 70.33 | 83.86 | 103.70 | 192.97 | 45.40 | 61.74 | 80.51 | 137.41 |
| 40.58 | 46.89 | 57.71 | | | | | 45.40 | 61.74 | 81.11 | 143.46 |
| | | | | | | | 45.40 | 63.56 | 81.72 | 162.83 |
| | | | | | | | 47.22 | 63.56 | | |

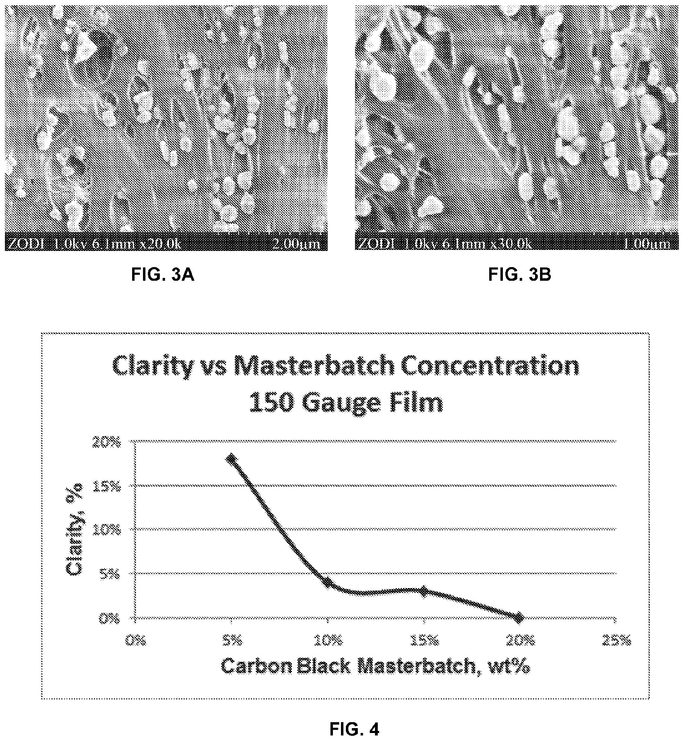

FIG. 3A is a scanning electron microscope image of the ZODI masterbatch having titanium oxide particles taken at 20,000X according to an embodiment. FIG. 3B is a scanning electron microscope image of the ZODI masterbatch having titanium dioxide particles taken at 30,000X according to an embodiment. The TiO₂ masterbatch used in these examples was supplied by Ampacet Corporation.

Table 2 provides an extensive sampling of the particle sizes for the carbon black in FIG. 2A and FIG. 2B. This information shows the sizes of the carbon black particles ranges from about 25.4 nm to about 193.0 nm, has a D50 or median value ranging from about 63.6 nm to about 65.8 nm, a mean value ranging from about 66.7 nm to about 71.0 nm, and a standard deviation ranging from about 25.8 nm to about 32.1 nm. With a sampling error of +/- 10%, the carbon black particles have a D50 or median value ranging from about 57.2 nm to about 72.4 nm, and a mean value ranging from about 60.0 nm to about 78.7 nm.

Table 3 provides an extensive sampling of the particle sizes for the TiO₂ in FIG. 3A and FIG. 3B. This information shows the sizes of the TiO₂ particles ranges from about 46.5 nm to about 194.4 nm, has a D50 or median value ranging from about 152.8 nm to about 153.9 nm, a mean value ranging from about 160.1 nm to about 161.7 nm, and a standard deviation ranging from about 68.1 nm to about 68.5 nm. With a sampling error of +/- 10%, the TiO₂ particles have a D50 or median value ranging from about 137.5 nm to about 169.2 nm, and a mean value ranging from about 154.0 nm to about 177.9 nm.

Antiblock and slip agents of the outer skin includes a proprietary combination of amorphous silicon, N,N' ethylene-bis-stearamide, oleamide wax, and erucamide wax. The antiblock agent of the outer skin, in particular, is alkali-alumino-silicate ceramic spheres. x% is the percentage of CHAR used in the microlayers of the core, and y% is the percentage of ZODI used in the microlayers of the core. The antiblock agent of the substrate is anhydrous aluminum silicate. The slip₁ agent of the substrate layer comprises N,N' ethylene-bis-stearamide, while the slip₂ agent is erucamide wax and the slip₃ agent is oleamide.

**TABLE 3**

| Titanium Dioxide Particle Size Distribution | | | | | | | |
|---|---|---|---|---|---|---|---|
| Figure 3A | | | | | | Figure 3B | |
| 153.85 | | | D50, nm | | | 152.81 | |
| 161.71 | | | average, nm | | | 160.08 | |
| 68.08 | | | stddev, nm | | | 68.52 | |
| FIG. 3A Sampled Values | | | | | FIG. 3B Sampled Values | | |
| 47.62 | 113.55 | 155.68 | | 195.97 | 46.45 | 116.14 | 195.60 |
| 60.44 | 113.55 | 155.68 | | 197.80 | 50.12 | 119.80 | 196.82 |
| 60.44 | 113.55 | 157.51 | | 197.80 | 59.90 | 122.25 | 196.82 |
| 64.10 | 117.22 | 161.17 | | 205.13 | 74.57 | 127.14 | 198.04 |
| 65.93 | 117.22 | 161.17 | | 210.62 | 75.79 | 128.36 | 199.27 |
| 65.93 | 117.22 | 161.17 | | 217.95 | 78.24 | 134.47 | 205.38 |
| 69.60 | 119.05 | 168.50 | | 223.44 | 78.24 | 135.70 | 209.05 |
| 69.60 | 120.88 | 168.50 | | 228.94 | 79.46 | 136.92 | 210.27 |
| 80.59 | 124.54 | 170.33 | | 234.43 | 79.46 | 138.14 | 213.94 |
| 80.59 | 124.54 | 173.99 | | 234.43 | 83.13 | 140.59 | 226.16 |
| 84.25 | 124.54 | 179.49 | | 236.26 | 85.57 | 151.59 | 229.83 |
| 87.91 | 130.04 | 179.49 | | 245.42 | 85.57 | 152.81 | 234.72 |
| 87.91 | 131.87 | 179.49 | | 247.25 | 85.57 | 152.81 | 237.16 |
| 89.74 | 131.87 | 179.49 | | 252.75 | 86.80 | 160.15 | 238.39 |
| 93.41 | 131.87 | 179.49 | | 256.41 | 86.80 | 163.81 | 242.05 |
| 93.41 | 135.53 | 179.49 | | 274.73 | 91.69 | 165.04 | 244.50 |
| 95.24 | 137.36 | 179.49 | | 282.05 | 92.91 | 168.70 | 244.50 |
| 97.07 | 142.86 | 181.32 | | 282.05 | 95.35 | 172.37 | 245.72 |
| 97.07 | 144.69 | 181.32 | | 282.05 | 96.58 | 173.59 | 259.17 |
| 100.73 | 144.69 | 186.81 | | 296.70 | 99.02 | 177.26 | 262.84 |
| 102.56 | 144.69 | 188.64 | | 311.36 | 107.58 | 182.15 | 270.17 |
| 106.23 | 148.35 | 190.48 | | 313.19 | 107.58 | 184.60 | 273.84 |
| 106.23 | 148.35 | 192.31 | | 313.19 | 110.02 | 185.82 | 278.73 |
| 109.89 | 150.18 | 192.31 | | 320.51 | 111.25 | 185.82 | 328.85 |
| 111.72 | 152.01 | 192.31 | | 362.64 | 112.47 | 187.04 | 352.08 |
| 111.72 | 155.68 | | | | 114.91 | 194.38 | |

Table 4 provides exemplary compositions of the layers of a film according to an embodiment using a carbon black pigment to provide a black film.

In constructing the sample films of these examples, EF437AA from Westlake Chemical was used to for the ethylene vinyl acetate copolymer having 2.5% vinyl acetate. DOWLEX™ 2037 masterbatch resin from Dow Chemical Company was used for the medium density polyethylene having ethylene octene copolymer. The copolymer of this masterbatch has about 2.5% comonomer content, a density of about 0.935 g/cm³, and about a 124.7°C melting point. DOWLEX 2045.05 masterbatch resin from Dow Chemical Company was used to provide the linear low density polyethylene having ethylene octene copolymer. The copolymer of this masterbatch has about 6.5% comonomer content, a density of about 0.920 g/cm³, and about a 124°C melting point.

**TABLE 4**

| Exemplary Compositions of the Layers of a Black Film | | |
|---|---|---|
| Layer | Compound | Concentration wt% |
| outer layer | Ethylene vinyl acetate copolymer | 25.78% |
| | LLDPE | 44.01% |
| | MDPE | 21.87% |
| | Ethylene octene copolymer (<10% octene) | 7.32% |
| | Antiblock/Slip | 1.02% |
| substrate layer | Ethylene vinyl acetate copolymer | 26.80% |
| | LLDPE | 44.01% |
| | MDPE | 21.87% |
| | Ethylene octene copolymer (<10% octene) | 7.32% |
| Microlayer A | LLDPE | 67.50% |
| | LDPE | 12.50% |
| | Ethylene octene copolymer (<10% octene) | 7.50% |
| | Carbon Black | 12.50% |
| Microlayer B | LLDPE | 42.75% |
| | LDPE | 12.50% |
| | MDPE | 24.75% |
| | Ethylene octene copolymer (<10% octene) | 7.50% |
| | Carbon Black | 12.50% |

Table 5 provides exemplary compositions of the layers of a film according to another embodiment using a titanium dioxide pigment to provide a white film.

Table 6 provides exemplary compositions of the layers of a film according to yet another embodiment using both a carbon black and titanium dioxide pigments to provide a gray film.

**TABLE 5**

| Exemplary Compositions of the Layers of a White Film | | |
|---|---|---|
| Layer | Compound | Concentration wt% |
| Outer Layer | Ethylene vinyl acetate copolymer | 25.78% |
| | LLDPE | 44.01% |
| | MDPE | 21.87% |
| | Ethylene octene copolymer (<10% octene) | 7.32% |
| | Antiblock/Slip | 1.02% |
| Substrate Layer | Ethylene vinyl acetate copolymer | 26.80% |
| | LLDPE | 44.01% |
| | MDPE | 21.87% |
| | Ethylene octene copolymer (<10% octene) | 7.32% |
| Microlayer A | LLDPE | 78.00% |
| | Ethylene octene copolymer (<10% octene) | 7.00% |
| | Titanium Dioxide | 15.00% |
| Microlayer B | LLDPE | 55.50% |
| | MDPE | 22.50% |
| | Ethylene octene copolymer (<10% octene) | 7.00% |
| | Titanium Dioxide | 15.00% |

**TABLE 6**

| Exemplary Compositions of the Layers of a Gray Film | | |
|---|---|---|
| Layer | Compound | Concentration wt% |
| Outer Layer | Ethylene vinyl acetate copolymer | 25.78% |
| | LLDPE | 44.01% |
| | MDPE | 21.87% |
| | Ethylene octene copolymer (<10% octene) | 7.32% |
| | Antiblock/Slip | 1.02% |
| Substrate Layer | Ethylene vinyl acetate copolymer | 26.80% |
| | LLDPE | 54.00% |
| | MDPE | 22.50% |
| | Ethylene octene copolymer (<10% octene) | 8.50% |
| Microlayer A | LLDPE | 73.00% |
| | LDPE | 5.00% |
| | Ethylene octene copolymer (<10% octene) | 7.00% |
| | Carbon Black | 5.00% |
| | Titanium Dioxide | 10.00% |
| Microlayer B | LLDPE | 50.50% |
| | LDPE | 5.00% |
| | MDPE | 22.50% |
| | Ethylene octene copolymer (<10% octene) | 7.00% |
| | Carbon Black | 5.00% |
| | Titanium Dioxide | 10.00% |

### EXAMPLE 1

The sample films prepared using the carbon black-based masterbatch (CHAR) in the microlayers are listed in Table 7.

**TABLE 7**

| Opacity of Films having Carbon Black-Based Masterbatch (CHAR) in Microlayers | | | | | | |
|---|---|---|---|---|---|---|
| | | Example 1 | Example 2 | Example 3 | Example 4 | Example 5 |
| Thickness, µm (gauge) | | 38.1 (150) | 28.8 (115) | 22.9 (90) | 17.8 (70) | 22.9 (90) |
| Microlayer A | x%, wt% | 20.00% | 25.00% | 25.00% | 30.00% | 10.00% |
| | carbon black, wt% | 10.00% | 12.50% | 12.50% | 15.00% | 5.00% |
| | y%, wt% | 0.00% | 0.00% | 0.00% | 0.00% | 20.00% |
| | TiO₂, wt% | 0.00% | 0.00% | 0.00% | 0.00% | 10.00% |
| Microlayer B | x%, wt% | 20.00% | 25.00% | 25.00% | 30.00% | 10.00% |
| | carbon black, wt% | 10.00% | 12.50% | 12.50% | 15.00% | 5.00% |
| | y%, wt% | 0.00% | 0.00% | 0.00% | 0.00% | 20.00% |
| | TiO₂, wt% | 0.00% | 0.00% | 0.00% | 0.00% | 10.00% |
| Color | | Black | Black | Black | Black | Dark Gray |
| Opacity, % | | 100.00% | 100.00% | 100.00% | 100.00% | 100.00% |

Notably, the opacity of all of the films having between about 20 wt% and about 30 wt% of the masterbatch having carbon black (from about 10 wt% to about 15 wt% carbon black) has an opacity of about 100%. As shown in Example 5, even films having a combination of about 10 wt% of the masterbatch containing carbon black and 20 wt% of the masterbatch with the white-based pigment-e.g., titanium dioxide-still demonstrate an opacity of about 100%. The total combination of pigments in Example 5 is about 5 wt% carbon black and about 10 wt% of titanium dioxide.

Other properties of the films having the carbon black-based masterbatch in the microlayers as shown in Table 7 are identified in Table 8.

### PREFERENCE EXAMPLE 2

The sample films prepared using the TiO₂-based masterbatch (ZODI) in the microlayers are listed in Table 9.

**TABLE 8**

| Other Properties of Films having Carbon Black-Based Masterbatch (CHAR) in Microlayers | | | | | | | |
|---|---|---|---|---|---|---|---|
| Property | Unit | ASTM Test | Example 1 | Example 2 | Example 3 | Example 4 | Example 5 |
| Impact Strength Peak Load | kg (lbs) | D3763-95a | 7.66 (16.9) | 10.5 (23.2) | 11.0 (24.3) | 15.2 (33.5) | 9.25 (20.4) |
| Clarity | % | D1747-92 | 0% | 0% | 0% | 0% | 0% |
| Gloss | % | D2457-90 | 50% | 48% | 48% | 47% | 49% |
| Coefficient of Friction | % | D1894-95 | 0.163 | 0.130 | 0.132 | 0.141 | 0.125 |
| Moisture Vapor Transmission Rate | g/m²/day/ MPa (g/100 in² /day/atm) | F1249-90 | 159.9 | 126.2 | 107.1 | 78.03 | 137.7 |
| | | | (1.045) | (0.825) | (0.700) | (0.510) | (0.900) |
| Oxygen Transmission Rate | cm³/m²/ day/MPa (cc/m²/day /atm) | D3985-95 | 61,045 | 46,780 | 42,980 | 30,450 | 49,450 |
| | | | (6,185) | (4,740) | (4,355) | (3,085) | (5,010) |
| Tensile Strength, LD/TD | MPa (x1000 psi) | D882-95 | 131/140 | 119/117 | 108/104 | 109/110 | 112/105 |
| | | | (19.0/20.3) | (17.3/17.0) | (15.7/15.1) | (15.8/16.0) | (16.2/15.2) |
| Elongation at Break, LD/TD | % | D882-95 | 120%/95% | 130%/110% | 150%/140% | 170%/150% | 120%/99% |
| Modulus, LD/TD | MPa (x1000 psi) | D882-95 | 532/611 | 483/508 | 419/470 | 416/461 | 490/534 |
| | | | (77.1/88.6) | (70.1/73.7) | (60.6/68.1) | (60.3/66.8) | (71.1/77.4) |
| Elmendorf Tear, LD/TD | g | D1922 | 15.4/13.1 | 26.1/21.9 | 28.3/27.9 | 41.1/36.9 | 27.1/25.3 |
| Shrink Tension, LD/TD | MPa (psi) | D2838-95 | | | | | |
| @93.3° (200°F) | | | 2.34/3.85 | 2.19/3.63 | 1.95/3.34 | 2.22/3.71 | 2.08/3.94 |
| | | | (340/558) | (317/527) | (283/485) | (322/538) | (301/572) |
| @104°C (220°F) | | | 2.79/4.48 | 2.53/3.95 | 2.43/3.70 | 2.67/4.06 | 2.54/3.97 |
| | | | (405/650) | (367/573) | (352/536) | (387/589) | (368/576) |
| @116°C (240°F) | | | 3.26/4.63 | 2.92/4.00 | 2.77/3.56 | 2.88/4.10 | 2.81/3.96 |
| | | | (473/672) | (424/580) | (402/517) | (417/594) | (407/574) |
| Free Shrink, LD/TD | % | D2732-83 | | | | | |
| @93.3°C (200°F) | | | 11/14 | 11/17 | 11/16 | 14/21 | 12/16 |
| @104°C (220°F) | | | 21/28 | 22/32 | 22/33 | 28/37 | 20/28 |
| @116°C (240°F) | | | 52/57 | 57/61 | 59/63 | 60/63 | 57/62 |

As shown in Table 9, the masterbatch having the white-based pigment-TiO₂ in this case-results in opacities that are on the order of from about 57% to about 67%. While the microlayers of Example 8 have 40 wt% of the TiO₂-based pigment, as shown in Example 7, even if Microlayer B includes 40 wt% of the masterbatch having the carbon black pigment, the opacity only slightly increases from 57% to 67% when Microlayer A includes 40 wt% of the masterbatch having the TiO₂-based pigment.

**TABLE 9**

| Opacity of Films having TiO₂-Based Masterbatch (ZODI) in Microlayers | | | | | |
|---|---|---|---|---|---|
| | | Example 6 | Example 7 | Example 8 | Example 9 |
| Thickness, µm (gauge) | | 38.1 (150) | 28.8 (115) | 22.9 (90) | 17.8 (70) |
| Micro layer A | x%, wt% | 0.00% | 0.00% | 0.00% | 0.00% |
| | carbon black, wt% | 0.00% | 0.00% | 0.00% | 0.00% |
| | y%, wt% | 30.00% | 40.00% | 40.00% | 40.00% |
| | TiO₂, wt% | 15.00% | 20.00% | 20.00% | 20.00% |
| Micro layer B | x%, wt% | 0.00% | 40.00% | 0.00% | 0.00% |
| | carbon black, wt% | 0.00% | 20.00% | 0.00% | 0.00% |
| | y%, wt% | 30.00% | 0.00% | 40.00% | 40.00% |
| | TiO₂, wt% | 15.00% | 0.00% | 20.00% | 20.00% |
| Color | | White | White | White | White |
| Opacity, % | | 64.00% | 67.00% | 59.00% | 57.00% |

| | | | | | |
|---|---|---|---|---|---|
| *Examples 6-9 are Reference Examples. | | | | | |

Generally, the 22.9 µm (90 gauge) film appears to offer suitable coefficient of friction, moisture vapor transmission rate (MVTR), oxygen transmission rate (OTR), tensile strength, % elongation at break, modulus and shrink tension and free shrink numbers when balanced against the film thickness. This somewhat excellent performance at a much thinner film reduces the amount of required polymers/plastic and improves the carbon footprint of the film.

Other properties of the films having the TiO₂-based masterbatch in the microlayers as shown in Table 9 are identified in Table 10.

### EXAMPLE 3

In order to see if the opacities would improve by stacking a film having a high opacity to a film having a lower capacity, the sample stacked films prepared as shown in Table 11 were tested.

As shown in Table 11, the opacity of a stacked film significantly improves to on the order of 99% or more by including one of the films having microlayers that include the masterbatch having the carbon black-based pigment even though the other film has microlayers that include the masterbatch having the TiO₂-based pigment.

**TABLE 10**

| Other Properties of Films having TiO2-Based Masterbatch (ZODI) in Microlayers | | | | | | |
|---|---|---|---|---|---|---|
| Property | Unit | ASTM Test | Example 6 | Example 7 | Example 8 | Example 9 |
| Impact Strength Peak Load | kg (lbs) | D3763-95a | 8.03 (17.7) | 9.98 (22.0) | 117 (25.9) | 13.7 (30.3) |
| Clarity | % | D1747-92 | 0.2% | 0.2% | 0.2% | 0.2% |
| Gloss | % | D2457-90 | 51% | 52% | 52% | 52% |
| Coefficient of Friction | % | D1894-95 | 0.119 | 0.116 | 0.125 | 0.125 |
| MVTR | g/m²/day/ MPa (g/100 in² /day/atm) | F1249-90 | 168 (1.10) | 121 (0.79) | 93.3 (0.61) | 88.7 (0.58) |
| OTR | cm³/m²/ day/MPa (cc/m²/day /atm) | D3985-95 | 78,960 (8,000) | 44,220 (4,480) | 44,220 (4,480) | 42.690 (4,325) |
| Tensile Strength, LD/TD | MPa (x1000 psi) | D882-95 | 108/99.2 (15.6/14.4) | 109/92.4 (15.8/13.4) | 103/96.5 (14.9/14.0) | 103/95.8 (15.0/13.9) |
| Elongation at Break, LD/TD | % | D882-95 | 100/120 | 130/100 | 170/160 | 180/130 |
| Modulus, LD/TD | MPa (x1000 psi) | D882-95 | 384/376 (55.7/54.6) | 376/389 (54.6/56.4) | 343/349 (49.7/50.6) | 301/328 (43.6/47.5) |
| Elmendorf Tear, LD/TD | g | D1922 | 11.6/14.9 | 17.5/16.0 | 28.3/25.5 | 35.0/33.3 |
| Shrink Tension, LD/TD | MPa (psi) | D2838-95 | | | | |
| @93.3°C (200°F) | | | 1.70/3.26 (246/473) | 1.88/2.83 (273/410) | 1.83/3.11 (265/451) | 1.92/3.72 (279/539) |
| @104°C (220°F) | | | 2.59/3.93 (375/570) | 2.23/3.08 (324/446) | 2.21/3.59 (320/520) | 2.07/3.90 (300/566) |
| @116°C | | | 2.90/3.59 | 2.56/3.30 | 2.79/3.37 | 2.45/3.21 |
| (240°F) | | | (421/521) | (372/479) | (405/489) | (356/465) |
| Free Shrink, LD/TD | % | D2732-83 | | | | |
| @93.3°C (200°F) | | | 9/17 | 10/15 | 11/19 | 11/19 |
| @104°C (220°F) | | | 18/30 | 18/26 | 20/31 | 22/33 |
| @116°C (240°F) | | | 52/58 | 46/53 | 53/59 | 51/57 |

**TABLE 11**

| Opacity of Stacked Films having Carbon Black-Based Masterbatch in the Microlayers and the Other having Titanium Dioxide-Based Masterbatch in the Microlayers | | | | |
|---|---|---|---|---|
| | | | Example 10 | Example 11 |
| Film 1 | Thickness, µm (gauge) | | 17.8 (70) | 17.8 (70) |
| | Microlayer A | x%, wt% | 25.00% | 0.00% |
| | | carbon black, wt% | 12.50% | 0.00% |
| | | y%, wt% | 0.00% | 50.00% |
| | | TiO₂, wt% | 0.00% | 25.00% |
| | Microlayer B | x%, wt% | 25.00% | 0.00% |
| | | carbon black, wt% | 12.50% | 0.00% |
| | | y%, wt% | 0.00% | 50.00% |
| | | TiO₂, wt% | 0.00% | 25.00% |
| Film 2 | Thickness, µm (gauge) | | 17.8 (70.00) | 17.8 (70.00) |
| | Microlayer A | x%, wt% | 0.00% | 25.00% |
| | | carbon black, wt% | 0.00% | 12.50% |
| | | y%, wt% | 50.00% | 0.00% |
| | | TiO₂, wt% | 25.00% | 0.00% |
| | Microlayer B | x%, wt% | 0.00% | 25.00% |
| | | carbon black, wt% | 0.00% | 12.50% |
| | | y%, wt% | 50.00% | 0.00% |
| | | TiO₂, wt% | 25.00% | 0.00% |
| Color | | | black/white stacked | white/black stacked |
| Opacity, % | | | 99.00% | 99.80% |

### EXAMPLE 4

The variation in clarity relative to the concentration of the masterbatch having the carbon black pigment in the microlayer was determined.

**TABLE 12**

| Clarity versus CHAR Masterbatch Concentration in 38.1 µm (150 Gauge) Film | |
|---|---|
| CHAR, wt% | Clarity, % |
| 5% | 18% |
| 10% | 4% |
| 15% | 3% |
| 20% | 0% |

The results of these tests are provided in Table 12 with a graphical representation shown in FIG. 4. As Table 12 shows, the clarity significantly improves upon increasing the carbon black-based masterbatch from 5 wt% to 10 wt% in the microlayer of the film.

### EXAMPLE 5

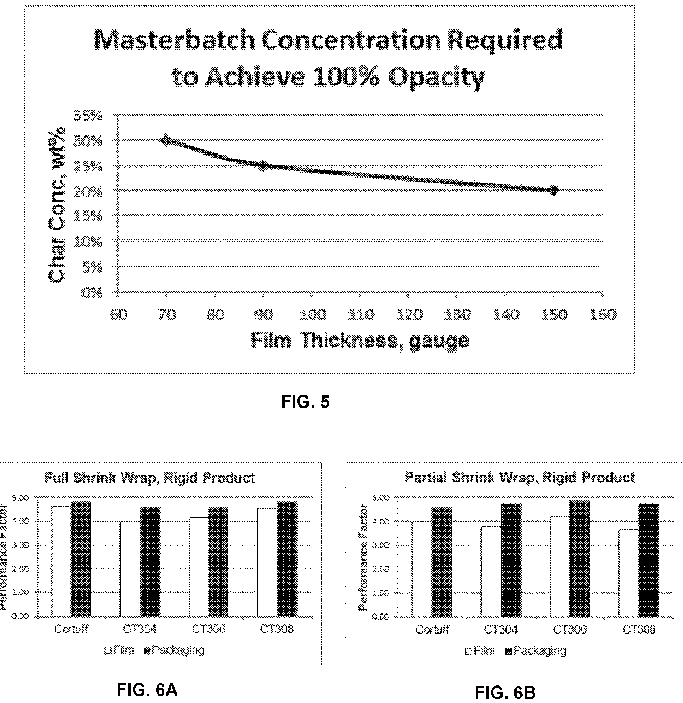

Variations in film thickness will dictate the amount of masterbatch required in the microlayers to achieve 100% opacity. The concentration of the masterbatch having the carbon black pigment in the microlayer required to achieve 100% opacity based upon the thickness of the film was determined. The results of these tests are provided in Table 13 with a graphical representation shown in FIG. 5.

**TABLE 13**

| Masterbatch Concentration to Achieve 100% Opacity | |
|---|---|
| Film Thickness µm (gauge) | Masterbatch wt% |
| 17.8 (70) | 30% |
| 22.9 (90) | 25% |
| 38.1 (150) | 20% |

### EXAMPLE 6

Ship tests were performed on various films using the core layer microlayer technology. In these sets of tests, the microlayers were substantially free of any pigment resulting in a substantially clear film lacking any color.

Film type, bag type and product type test factors were each evaluated in these tests. Four film types were tested including the CORTUFF® high-abuse shrink film manufactured using a coextrusion process and three films using the microlayer including CT308, a 38.1 µm (150 gauge) film; CT306, a 22.9 µm (90 gauge) film, and CT304, a 14.0 µm (55 gauge) film. It should be noted that while the CORTUFF film was opaque, the microlayer based films of these tests were clear for comparative purposes. The bag types included full shrink (film contacts 100% of surface of packaged product), partial shrink (double speed through shrink tunnel) and no shrink (loose bag having 2.54 cm (1") between edge of packaged product and outside edge of film bag) bag types while the packaged product type included rigid (30.5 cm x 27.9 cm x 1.90 cm (12" x 11" x ¾") wood pine block), semi-rigid (35.6 cm x 35.6 cm x 5.1 cm (14" x 14" x 2") chipboard apparel box), and soft (38.1 cm x 0.63 cm (15" x ¼") folded dunnage paper).

The test included four replicates resulting in 144 total test packs to encompass each combination of the test factors. The packs were shipped out of one location and sent to two distant locations, and, once received, returned to the originating location. Handling of the packages as well as the number and types of hubs they passed through affected the package condition once it was received at the final destination. Nineteen of the 144 test packs were lost in transit, which may have been due, at least in part, to the packaging from the labeled shipped item being accidentally removed from the item.

An overall film performance factor was calculated based upon the evaluated conditions of the wrapped corners (36.4% contribution), the wrapped seals (27.3% contribution), and the wrapped face (36.4% contribution), while an overall packaging performance factor was calculated based upon the evaluated condition of the product crush (40% contribution), product tear (30% contribution), and product scuff (30% contribution). A score of five (5) is the best score available. Anything less indicates there were performance problems with either the film or problems encountered with the packaged product. Table 14 provides the average responses for each of the packages received back in the test-typically four, but some with three, and a few having two due to lost packages (the latter typically have lower average responses anyway indicating it is likely the packaging on the missing samples were damaged while in shipment).

**TABLE 14**

| Clear Film Endurance Tests (CORTUFF Film is Opaque) | | | | | |
|---|---|---|---|---|---|
| Performance Factors | | | | | |
| Film Type | Bag Type | Product Type | Condition Comments | Film | Packaging |
| CORTUFF | Full Shrink | Rigid | Corner tears | 4.64 | 4.80 |
| CORTUFF | Full Shrink | Semi Rigid | Corner tears | 4.57 | 4.68 |
| CORTUFF | Full Shrink | Soft | | 3.94 | 4.67 |
| CORTUFF | No Shrink | Rigid | Some tears, one missing | 4.88 | 5.00 |
| CORTUFF | No Shrink | Semi Rigid | | 4.79 | 5.00 |
| CORTUFF | No Shrink | Soft | Two missing | 4.64 | 4.20 |
| CORTUFF | Partial Shrink | Rigid | Some corner tears | 3.98 | 4.55 |
| CORTUFF | Partial Shrink | Semi Rigid | One missing | 4.64 | 4.23 |
| CORTUFF | Partial Shrink | Soft | | 4.30 | 4.85 |
| CT304 | Full Shrink | Rigid | | 3.98 | 4.58 |
| CT304 | Full Shrink | Semi Rigid | | 3.61 | 4.50 |
| CT304 | Full Shrink | Soft | Corner & side tears | 4.30 | 3.88 |
| CT304 | No Shrink | Rigid | Corner tears | 4.55 | 4.53 |
| CT304 | No Shrink | Semi Rigid | Corner & edge tears | 4.55 | 4.63 |
| CT304 | No Shrink | Soft | One missing | 5.00 | 4.50 |
| CT304 | Partial Shrink | Rigid | Corner tears | 3.75 | 4.73 |
| CT304 | Partial Shrink | Semi Rigid | All had corner tears | 3.98 | 3.53 |
| CT304 | Partial Shrink | Soft | One edge tear | 3.45 | 4.63 |
| CT306 | Full Shrink | Rigid | Corner tears; one missing | 4.15 | 4.60 |
| CT306 | Full Shrink | Semi Rigid | One missing | 4.00 | 4.30 |
| CT306 | Full Shrink | Soft | | 4.88 | 4.87 |
| CT306 | No Shrink | Rigid | Corner & edge tears | 4.02 | 4.38 |
| CT306 | No Shrink | Semi Rigid | | 4.82 | 4.68 |
| CT306 | No Shrink | Soft | | 4.14 | 4.58 |
| CT306 | Partial Shrink | Rigid | Multiple corner tears | 4.18 | 4.85 |
| CT306 | Partial Shrink | Semi Rigid | One missing | 4.45 | 3.83 |
| CT306 | Partial Shrink | Soft | | 3.80 | 4.68 |
| CT308 | Full Shrink | Rigid | Corner tears | 4.52 | 4.80 |
| CT308 | Full Shrink | Semi Rigid | | 4.84 | 4.48 |
| CT308 | Full Shrink | Soft | One missing | 4.55 | 4.80 |
| CT308 | No Shrink | Rigid | Corner tears; one missing | 3.97 | 4.10 |
| CT308 | No Shrink | Semi Rigid | Seal tear; one missing | 4.42 | 4.80 |
| CT308 | No Shrink | Soft | | 4.07 | 4.23 |
| CT308 | Partial Shrink | Rigid | Two missing | 3.64 | 4.70 |
| CT308 | Partial Shrink | Semi Rigid | Corner & seal tears | 4.05 | 4.55 |
| CT308 | Partial Shrink | Soft | | 4.36 | 4.53 |

The following general observations were made based upon the results of this testing: (i) while the CORTUFF film performed well in comparison to the films including a microlayer they are limited from the standpoint that the film is 50.8 µm (2 mils) or greater in thickness leading to more difficulty in processing and requires mechanical folding; (ii) full shrunk bags offer only slight compression protection since the product has a more difficult time expanding upon application of a crushing force; (iii) full shrunk bags are more prone to wholes due to scuffing since the film remains in the same position at all times during transport; (iv) the films offer opaque films allowing for product concealment; (v) 100% opacity is achieved in all films having thickness greater than or equal to 17.8 µm (70 gauge); (vi) the films offer good sealability and shrink film properties; (vii) overall, CT304, the 14.0 µm (55 gauge) film, did not perform as well as the thicker films; and (viii) in terms of overall properties and packaging effectiveness, the minimum film thickness for packaging applications is about 22.9 µm (90 gauge).

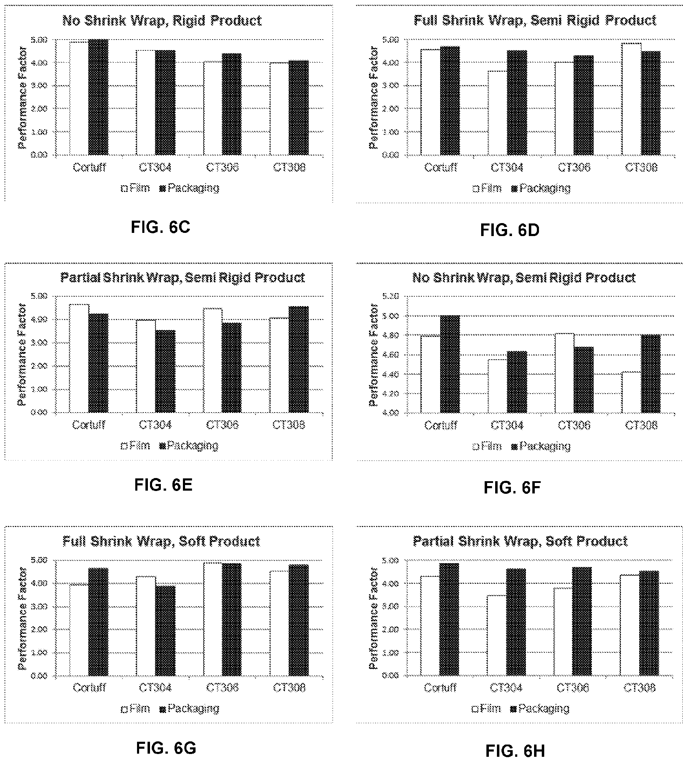

FIG. 6A illustrates the performance parameters of each of the films for full shrink wrapped rigid products. FIG. 6B illustrates the performance parameters of each of the films for partial shrink wrapped rigid products. FIG. 6C illustrates the performance parameters of each of the films for no shrink wrapped rigid products. As these figures show, the shrink wrap films, in particular, the CT306 22.9 µm (90 gauge) film and the CT308 38.1 µm (150 gauge) film, perform better than or at least as well as the CORTUFF high abuse film either in full shrink or partial shrink for rigid products. FIG. 6C demonstrates the heat shrinkable films do not necessarily perform as well when used in no shrink wrapping applications for rigid products.

FIG. 6D illustrates the performance parameters of each of the films for full shrink wrapped semi rigid products. FIG. 6E illustrates the performance parameters of each of the films for partial shrink wrapped semi rigid products. FIG. 6F illustrates the performance parameters of each of the films for no shrink wrapped semi rigid products. As these figures continue to confirm, the shrink wrap films, in particular, the CT306 22.9 µm (90 gauge) film and the CT308 38.1 µm (150 gauge) film, perform better than or at least as well as the CORTUFF high abuse film either in full shrink or partial shrink for semi rigid products. FIG. 6F again demonstrates the heat shrinkable films do not necessarily perform as well when used in no shrink wrapping applications for semi rigid products.

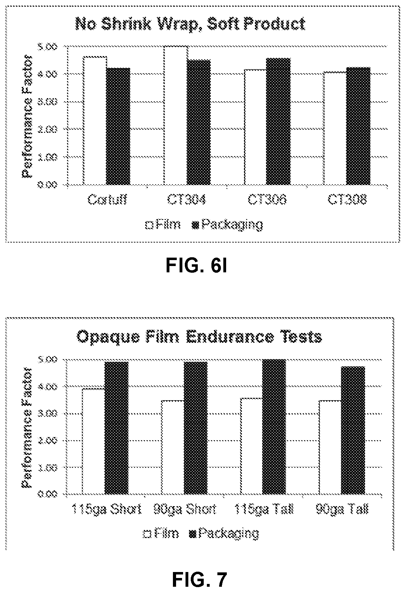

FIG. 6G illustrates the performance parameters of each of the films for full shrink wrapped soft products. FIG. 6H illustrates the performance parameters of each of the films for partial shrink wrapped soft products. FIG. 6I illustrates the performance parameters of each of the films for no shrink wrapped soft products. As these figures show, all the shrink wrap films perform better than or at least as well as the CORTUFF high abuse film either in full shrink or partial shrink for soft products. FIG. 6I demonstrates the heat shrinkable films and the CORTUFF high abuse film perform nearly equally as well when used in no shrink wrapping applications for soft products.

### EXAMPLE 7

Ship tests were performed on various films using the core layer microlayer technology. In these sets of test, the microlayers were comprised a pigment resulting in a in an opaque film having a black color.

Film type, bag type and product type test factors were each evaluated in these tests. Two film types were tested including a 22.9 µm (90 gauge) film and an 28.8 µm (115 gauge) film. All bags were full shrink (film contacts 100% of surface of packaged product). The packaged product type included a tall cardboard shoebox and a short cardboard shoe box.

Performance factors were calculated in the same way as explained in Example 6. Table 15 provides the average responses for each of the packages received back in the test (four for each film type and packaged box size).

**TABLE 15**

| Opaque Film Endurance Tests | | | | |
|---|---|---|---|---|
| Performance Factors | | | | |
| Film Type | Box Size | Condition Comments | Film | Packaging |
| 28.8 µm (115ga) | Short | 3 corner tears; off center seal | 3.91 | 4.90 |
| 22.9 µm (90ga) | Short | Major corner tear; 1 other corner tear | 3.45 | 4.90 |
| 28.8 µm (115ga) | Tall | 4 corner tears, thin cuts, scuff on one; 1 corner tear on another | 3.57 | 5.00 |
| 22.9 µm (90ga) | Tall | Big corner failure on one; 2 corner tears on another | 3.45 | 4.73 |

Films have a thickness of 22.9 µm (90 gauge) or greater are expected to perform reasonably well. While the 28.8 µm (115 gauge) film performed better than the 22.9 µm (90 gauge) film, the performance of the 22.9 µm (90 gauge) film was deemed acceptable. FIG. 7 illustrates the comparative performance parameters of each of the opaque films in these endurance tests.

## Claims

1. A microlayer comprising:
55 wt% to 80 wt% of a polyethylene;
2.5 wt% to 20 wt% of an elastomeric copolymer comprising an ethylene octene copolymer having less than 10 % by weight of an octene; and
5 wt% to 25 wt% of a pigment comprising submicron particles having an average diameter as measured according to the method in the description of less than 1 micron;
wherein a thickness of the microlayer is no greater than 38.1 µm (1.5 mils); and
wherein an opacity of the microlayer is at least 90%, as measured according to ASTM D6290.

2. The microlayer of claim 1, wherein the pigment comprises at least one of a carbon black and a titanium dioxide (TiO₂).

3. The microlayer of claim 2, wherein the carbon black comprises particles ranging from 25 nm to 200 nm in diameter, wherein the diameter is measured according to the method in the description.

4. The microlayer of claim 3, wherein the carbon black particles have a median diameter of from 57.2 nm to 72.4 nm, wherein the diameter is measured according to the method in the description.

5. The microlayer of claim 2, wherein the TiO₂ comprises particles ranging from 54 nm to 390 nm in diameter, wherein the diameter is measured according to the method in the description.

6. The microlayer of claim 5, wherein the TiO₂ particles have a median diameter of from 137.5 nm to 169.2 nm, wherein the diameter is measured according to the method in the description.

7. The microlayer of claim 1, wherein the polyethylene comprises:
30 wt% to 60 wt% linear low density polyethylene;
0 wt% to 20 wt% low density polyethylene; and
10 wt% to 30 wt% medium density polyethylene.

8. A film comprising:
an outer layer;
a substrate layer adjacent to the outer layer; and
a core layer adjacent to the substrate layer, the core layer comprising one or
more first microlayers according to any one of claims 1 to 7.

9. The film of claim 8, the core layer additionally comprising one or more second microlayers comprising a pigment having submicron particles having an average diameter as measured according to the method in the description of less than 1 micron.

10. The film of claim 9, wherein the pigment comprises at least one of carbon black particles ranging from 25 nm to 200 nm in diameter and TiO₂ particles ranging from 54 nm to 390 nm in diameter, wherein the diameter is measured according to the method in the description.

11. The film of claim 9, wherein each of the one or more second microlayers individually separate each of the one or more first microlayers.

12. The film of claim 11, wherein the core layer comprises thirteen one or more first microlayers and twelve one or more second microlayers.

13. The film of claim 12, wherein the film has an Elmendorf tear strength of at least 27.9 g, as measured according to ASTM D1922.

14. A method of manufacturing a film comprising:
passing a fluid through a plurality of microlayer assemblies to form film-like structures, the fluid comprising a pigment having one or more particulate compounds having diameters that are less than 390 nm, wherein the diameter is measured according to the method in the description;
aligning the plurality of microlayers according to any one of claims 1 to 7 to form a core layer;
extruding a substrate layer that is placed adjacent to the core layer; and
extruding an outer layer that is placed adjacent to the substrate layer.

## Patentansprüche

1. Mikroschicht, die
55 Gew.-% bis 80 Gew.-% eines Polyethylens,
2,5 Gew.-% bis 20 Gew.-% eines elastomeren Copolymers, das ein Ethylen-Octen-Copolymer umfasst, welches weniger als 10 Gew.-% eines Octens enthält, und
5 Gew.-% bis 25 Gew.-% eines Pigments umfasst, das Submikron-Partikel mit einem durchschnittlichen Durchmesser von weniger als 1 Mikron, gemessen nach dem Verfahren in der Beschreibung, enthält,
wobei eine Dicke der Mikroschicht nicht größer als 38,1 µm (1,5 mils) ist und
wobei eine Opazität der Mikroschicht mindestens 90%, gemessen nach ASTM D6290, beträgt.

2. Mikroschicht nach Anspruch 1, bei der das Pigment mindestens eines von einem Ruß und einem Titandioxid (TiO₂) umfasst.

3. Mikroschicht nach Anspruch 2, bei der der Ruß Partikel mit einem Durchmesser im Bereich von 25 nm bis 200 nm enthält, wobei der Durchmesser nach dem Verfahren in der Beschreibung gemessen wird.

4. Mikroschicht nach Anspruch 3, bei der die Rußpartikel einen Medianwert des Durchmessers von 57,2 nm bis 72,4 nm aufweisen, wobei der Durchmesser nach dem Verfahren in der Beschreibung gemessen wird.

5. Mikroschicht nach Anspruch 2, bei der das TiO₂ Partikel mit einem Durchmesser im Bereich von 54 nm bis 390 nm enthält, wobei der Durchmesser nach dem Verfahren in der Beschreibung gemessen wird.

6. Mikroschicht nach Anspruch 5, bei der die TiO₂-Partikel einen Medianwert des Durchmessers von 137,5 nm bis 169,2 nm aufweisen, wobei der Durchmesser nach dem Verfahren in der Beschreibung gemessen wird.

7. Mikroschicht nach Anspruch 1, bei der das Polyethylen
30 Gew.-% bis 60 Gew.-% lineares Polyethylen niedriger Dichte,
0 Gew.-% bis 20 Gew.-% Polyethylen niedriger Dichte und
10 Gew.-% bis 30 Gew.-% Polyethylen mittlerer Dichte enthält.

8. Folie, die
eine äußere Schicht,
eine Substratschicht, die an die äußere Schicht angrenzt, und eine Kernschicht, die an die Substratschicht angrenzt, umfasst, wobei die Kernschicht eine oder mehrere erste Mikroschichten gemäß einem der Ansprüche 1 bis 7 umfasst.

9. Folie nach Anspruch 8, bei der die Kernschicht zusätzlich eine oder mehrere zweite Mikroschichten umfasst, die ein Pigment mit Submikron-Partikeln mit einem durchschnittlichen Durchmesser von weniger als 1 Mikron, gemessen nach dem Verfahren in der Beschreibung, enthalten.

10. Folie nach Anspruch 9, bei der das Pigment mindestens eines von Rußpartikeln mit einem Durchmesser im Bereich von 25 nm bis 200 nm und TiO₂-Partikeln mit einem Durchmesser im Bereich von 54 nm bis 390 nm enthält, wobei der Durchmesser nach dem Verfahren in der Beschreibung gemessen wird.

11. Folie nach Anspruch 9, bei der jede der einen oder mehreren zweiten Mikroschichten jede der einen oder mehreren ersten Mikroschichten einzeln trennt.

12. Folie nach Anspruch 11, bei der die Kernschicht dreizehn der einen oder mehreren ersten Mikroschichten und zwölf der einen oder mehreren zweiten Mikroschichten umfasst.

13. Folie nach Anspruch 12, wobei die Folie eine Elmendorf-Reißfestigkeit von mindestens 27,9 g, gemessen nach ASTM D1922, aufweist.

14. Verfahren zur Herstellung einer Folie, bei dem
ein Fluid durch eine Vielzahl von Mikroschichtanordnungen geleitet wird, um folienartige Strukturen zu bilden, wobei das Fluid ein Pigment mit einer oder mehreren partikelförmigen Verbindungen mit Durchmessern von weniger als 390 nm umfasst, wobei der Durchmesser nach dem Verfahren in der Beschreibung gemessen wird,
die Vielzahl von Mikroschichten gemäß einem der Ansprüche 1 bis 7 ausgerichtet wird, um eine Kernschicht zu bilden, eine Substratschicht extrudiert wird, die angrenzend an die Kernschicht angeordnet wird, und
eine Außenschicht extrudiert wird, die angrenzend an die Substratschicht angeordnet wird.

## Revendications

1. Microcouche comprenant :
de 55 % en poids à 80 % en poids d'un polyéthylène ;
de 2,5 % en poids à 20 % en poids d'un copolymère élastomère comprenant un copolymère d'éthylène-octène ayant moins de 10 % en poids d'un octène ; et
de 5 % en poids à 25 % en poids d'un pigment comprenant des particules submicroniques ayant un diamètre moyen, mesuré selon le procédé de la description, inférieur à 1 micron ;
dans lequel une épaisseur de la microcouche n'est pas supérieure à 38,1 µm (1,5 mils) ; et dans lequel une opacité de la microcouche est d'au moins 90 %, telle que mesurée selon ASTM D6290.

2. Microcouche selon la revendication 1, dans laquelle le pigment comprend au moins un parmi un noir de carbone et un dioxyde de titane (TiO₂).

3. Microcouche selon la revendication 2, dans laquelle le noir de carbone comprend des particules ayant un diamètre allant de 25 nm à 200 nm, dans laquelle le diamètre est mesuré selon le procédé de la description.

4. Microcouche selon la revendication 3, dans laquelle les particules de noir de carbone ont un diamètre médian de 57,2 nm à 72,4 nm, dans laquelle le diamètre est mesuré selon le procédé de la description.

5. Microcouche selon la revendication 2, dans laquelle le TiO₂ comprend des particules ayant un diamètre allant dans la plage de 54 nm à 390 nm, dans laquelle le diamètre est mesuré selon le procédé de la description.

6. Microcouche selon la revendication 5, dans laquelle les particules de TiO₂ ont un diamètre médian de 137,5 nm à 169,2 nm, dans laquelle le diamètre est mesuré selon le procédé de la description.

7. Procédé selon la revendication 1, dans lequel le polyéthylène comprend :
de 30 % en poids à 60 % en poids de polyéthylène linéaire basse densité,
de 0 % en poids à 20 % en poids de polyéthylène basse densité ; et
de 10 % en poids à 30 % en poids de polyéthylène de densité moyenne.

8. Film comprenant :
une couche externe ;
une couche de substrat adjacente à la couche externe ; et
une couche centrale adjacente à la couche de substrat, la couche centrale comprenant une ou plusieurs premières microcouches selon l'une quelconque des revendications 1 à 7.

9. Film selon la revendication 8, la couche centrale comprenant en outre une ou plusieurs secondes microcouches comprenant un pigment ayant des particules submicroniques ayant un diamètre moyen tel que mesuré selon le procédé dans la description de moins de 1 micron.

10. Film selon la revendication 9, dans lequel le pigment comprend au moins certaines parmi des particules de noir de carbone ayant un diamètre dans la plage allant de 25 nm à 200 nm et des particules de TiO₂ ayant un diamètre dans la plage allant de 54 nm à 390 nm, dans lequel le diamètre est mesuré selon le procédé de la description.

11. Film selon la revendication 9, dans lequel chacune des une ou plusieurs secondes microcouches sépare individuellement chacune des une ou plusieurs premières microcouches.

12. Film selon la revendication 11, dans lequel la couche centrale comprend treize une ou plusieurs premières microcouches et douze une ou plusieurs secondes microcouches.

13. Film selon la revendication 12, dans lequel le film a une résistance à la déchirure Elmendorf d'au moins 27,9 g, telle que mesurée selon ASTM D1922.

14. Procédé de fabrication d'un film comprenant les étapes consistant à :
faire passer un fluide à travers une pluralité d'ensembles de microcouches pour former des structures analogues à un film, le fluide comprenant un pigment ayant un ou plusieurs composés particulaires ayant des diamètres inférieurs à 390 nm, dans lequel le diamètre est mesuré selon le procédé de la description ;
aligner la pluralité de microcouches selon l'une quelconque des revendications 1 à 7 pour former une couche centrale ;
extruder une couche de substrat qui est placée de manière adjacente à la couche centrale ; et
extruder une couche extérieure qui est placée adjacente à la couche de substrat.
